# EUROPÄISCHE PATENTANMELDUNG

(11) **EP 3 144 138 A1**
(43) Veröffentlichungstag der Anmeldung: **22.03.2017**
(21) Anmeldenummer: 15186063.2
(22) Anmeldetag: 21.09.2015
(51) Int. Cl.: B32B 5/06, B32B 5/22, B32B 5/24, B32B 5/26, B32B 7/04, B32B 7/06, B32B 7/08, B32B 15/082, B32B 15/085, B32B 15/095, B32B 15/12

(54) **Trägerfolie für ein klettverlegesystem einer flächentemperierungssystems, diese umfassendes flächentemperierungssystem sowie herstellung eines flächentemperierungssystems**

(30) Priorität: 18.09.2015 DE 102015115807
(71) Anmelder: REHAU AG + Co, 95111 Rehau (DE)
(72) Erfinder: Tobias, Vohler, 92318 Neumarkt (DE); Burkhardt, Oliver, 91080 Uttenreuth (DE)

(57) **Zusammenfassung**

Die vorliegende Erfindung bezieht sich auf eine Trägerfolie (1) für ein Klettverlegesystem einer Flächentemperierungsvorrichtung (2), wobei die Trägerfolie (1) an einer Seite ein erstes Element (4) einer Klettverbindung (5) aufweist und als Verbundfolie ausgebildet ist, wobei sich an das auf die Trägerfolie (1) aufgebrachte Element (4) der Klettverbindung (5) im Folienaufbau eine Trägerschicht (6) anschließt, wobei im Folienaufbau auf die Trägerschicht (6) anschließend eine erste Metallschicht (7), eine Papierschicht (9) und eine zweite Polymerschicht (10) in dieser Sequenz folgen. Darüber hinaus bezieht sich die vorliegende Erfindung auf ein Flächentemperierungssystem (2), das mindestens ein flexibles Kunststoffrohr (3), dessen Außenseite zumindest teilweise von einem zweiten Element (17) einer Klettverbindung (5) ummantelt ist; eine erfindungsgemäße Trägerfolie (1); und einen formstabilen, flächigen Träger (15), auf dessen einer Seite die Trägerfolie (1) aufgebracht ist, umfasst. Letztlich bezieht sich die vorliegende Erfindung auch auf ein Verfahren zur Herstellung eines erfindungsgemäßen Flächentemperierungssystem (2), das die folgenden Stufen umfasst:
- Bereitstellen einer Abdeckfolie (16);
- Bereitstellen einer erfindungsgemäßen Trägerfolie (1);
- Zuführen der Abdeckfolie (16) und der Trägerfolie (1) zu einer Aufschäumvorrichtung;
- Aufschäumen eines Polymermaterials in eine Dicke von 1 cm bis 20 cm zur Polymerschaumstoff-Dämmschicht zwischen der Trägerfolie (1) und der Abdeckfolie (16) in der Aufschäumvorrichtung, wodurch ein einseitig mit der Trägerfolie (1) versehener, formstabiler, flächiger Träger (15) gebildet wird; und
- Verlegen eines flexiblen Kunststoffrohrs (3), dessen Außenseite zumindest teilweise von einem zweiten Element (17) der Klettverbindung (5) ummantelt ist, auf der Trägerfolie (1) unter Bildung der Klettverbindung (5), wodurch das Flächentemperierungssystem (2) gebildet wird.

## Beschreibung

Die vorliegende Erfindung betrifft eine Trägerfolie für ein Klettverlegesystem eines Flächen-temperierungssystems, wobei die Trägerfolie an einer Seite ein erstes Element einer Klettverbindung aufweist und als Verbundfolie ausgebildet ist, wobei sich an das auf die Trägerfolie aufgebrachte Element der Klettverbindung im Folienaufbau eine Trägerschicht anschließt. Darüber hinaus betrifft die vorliegende Erfindung ein Flächentemperierungssystem, das mindestens ein flexibles Kunststoffrohr, dessen Außenseite zumindest teilweise von einem ersten Element einer Klettverbindung ummantelt ist; eine erfindungsgemäße Trägerfolie sowie einen formstabilen, flächigen Träger, auf dessen einer Seite die Trägerfolie aufgebracht ist, umfasst. Ferner betrifft die vorliegende Erfindung ein Verfahren zur Herstellung eines erfindungsgemäßen Flächentemperierungssystems, in dem eine erfindungsgemäße Trägerfolie zum Einsatz kommt.

Flächentemperierungssysteme und darin einsetzbare flexible Kunststoffrohre sind aus dem Stand der Technik bekannt. Derartige Flächentemperierungssysteme werden zum Heizen und Kühlen von Räumen eingesetzt, wobei in Fußböden, Wänden oder Decken verlegte, von einem Wärmeträgermedium durchströmte Rohrleitungen in einer Estrichschicht in Fußböden oder in Putzen an Wänden oder Decken eingegossen sind. Vor dem Vergießen mit Estrich sind die Rohrleitungen üblicherweise durch geeignete Schienen oder Halter auf Trägern gehaltert. Zur einfacheren und schnelleren Verlegung ist es bekannt, die Rohrleitungen mittels einer Klettverbindung auf den Trägern zu festzulegen. Beispielsweise beschreibt die EP 0 346 549 A1 ein Flächentemperierungssystem mit einer Dämmplatte, auf deren eine Seite ein erstes Element einer Klettverbindung optional über eine Trägerfolie aufgeklebt ist, wobei als Trägerfolie eine Metallschicht genannt ist. Das Kunststoffrohr ist mit einem zweiten Element der Klettverbindung umwickelt. Bei der Verlegung wird eine lösbare Verbindung zwischen dem ersten Element der Klettverbindung auf der Dämmplatte und dem zweiten Element der Klettverbindung am Kunststoffrohr gebildet. Eine derartige reine Metallschicht als Trägerfolie hat den Nachteil, dass sie unter den rauen Bedingungen beim Transport und bei der Verlegung auf der Baustelle leicht beschädigt werden kann. Dies bedingt insbesondere langfristig verschlechterte Isolierungseigenschaften der Dämmplatte.

Durch offenkundige Vorbenutzung sind darüber hinaus Dämmplatten aus Polyurethan bekannt, auf deren einer Seite über eine Trägerfolie aus Polyethylen das erste Element einer Klettverbindung aufgebracht ist. Derartige Dämmplatten mit Trägerfolie aus Polyethylen weisen den Nachteil auf, dass sich die Isolierungseigenschaften der Dämmplatte relativ schnell verschlechtern.

An dieser Stelle setzt die vorliegende Erfindung ein, deren Aufgabe darin liegt, eine Trägerfolie für ein Klettverlegesystem einer Flächentemperierungsvorrichtung sowie ein dieses umfassende Flächentemperierungssystem zur Verfügung zu stellen, die die Nachteile des Stands der Technik überwinden. Insbesondere soll die erfindungsgemäße Trägerfolie dafür sorgen, dass die Isolierungseigenschaften eines formstabilen, flächigen Trägers über einen langen Zeitraum erhalten bleiben. Insbesondere soll diese Eigenschaft auch unter Transportbedingungen und unter rauen Bedingungen beim Verlegen des Flächentemperierungssystems erhalten bleibt. Darüber hinaus soll die erfindungsgemäße Trägerfolie einfach herzustellen sein.

Diese und andere Aufgaben werden durch eine Trägerfolie für ein Klettverlegesystem einer Flächentemperierungssystems mit den Merkmalen des Anspruchs 1 bzw. durch ein Flächentemperierungssystem mit den Merkmalen des Anspruchs 10 sowie ein Verfahren mit den Merkmalen des Anspruchs 15 gelöst. Bevorzugte Ausführungsformen der Erfindung sind in den davon jeweils abhängigen Ansprüchen beschrieben.

Gemäß der vorliegenden Erfindung wurde erkannt, dass die Isolierungseigenschaften eines formstabilen, flächigen Trägers über einen langen Zeitraum erhalten bleiben, dessen Folienaufbau an die Trägerschicht anschließend eine erste Metallschicht umfasst. Auf diese Weise ist die Metallschicht, die eine Diffusionssperrschicht für in den formstabilen, flächigen Träger eingeschlossenes Zellgas darstellt, auf beiden Seiten von einer diese schützenden Schicht umschlossen. Dadurch ist die Metallschicht unter Transport- und Verlegebedingungen vor Beschädigungen geschützt. Weiterhin schließen sich im Folienaufbau an die erste Polymerschicht eine Papierschicht und eine zweite Polymerschicht in dieser Abfolge an. Die Papierschicht sorgt für eine gewisse Stabilität der Trägerfolie, so dass das erste Element der Klettverbindung bereits beim Herstellungsprozess der Trägerfolie an sich aufgebracht werden kann, was deren Herstellungskosten senkt. Die Positionierung der ersten Metallschicht oberhalb der Papierschicht hat den Effekt, dass die Wärmeabgabe des erfindungsgemäßen Wärmetemperierungssystems an den Raum verbessert ist. Letztlich befindet sich erfindungsgemäß an der ersten Polymerschicht abgewandten Seite der Papierschicht erfindungsgemäß eine zweite Polymerschicht. Diese sorgt für die Verarbeitbarkeit der erfindungsgemäßen Trägerfolie während ihrer Herstellung und stellt eine geeignete Anschlussschicht für den formstabilen, flächigen Träger dar.

Dementsprechend liegt die vorliegende Erfindung in der Bereitstellung einer Trägerfolie für ein Klettverlegesystem einer Flächentemperierungsvorrichtung, wobei die Trägerfolie an einer Seite der Trägerfolie ein erstes Element einer Klettverbindung aufweist und als Verbundfolie ausgebildet ist, wobei sich an das auf die Trägerfolie aufgebrachte Element der Klettverbindung im Folienaufbau eine Trägerschicht anschließt und im Folienaufbau auf die Trägerschicht anschließend eine erste Metallschicht, eine Papierschicht und eine zweite Polymerschicht in dieser Sequenz folgen. Darüber hinaus stellt die vorliegende Erfindung ein Flächentemperierungssystem zur Verfügung, mindestens ein flexibles Kunststoffrohr, dessen Außenseite zumindest teilweise von einem zweiten Element einer Klettverbindung ummantelt ist; eine erfindungsgemäße Trägerfolie; und einen formstabilen, flächigen Träger, auf dessen einer Seite die Trägerfolie aufgebracht ist, umfasst.

In Bezug auf die erfindungsgemäße Trägerfolie kann es hilfreich sein, wenn zwischen der ersten Metallschicht und der Papierschicht eine erste Polymerschicht angeordnet ist. Dabei hat es sich als besonders bevorzugt erwiesen, wenn die erste Polymerschicht als Polyolefinschicht, insbesondere als Polyethylenschicht, oder als Haftvermittlerschicht ausgebildet ist. Eine derartige erste Polymerschicht stellt einen weiteren Schutz der Metallschicht dar.

Es kann auch von Vorteil sein, wenn sich im Folienaufbau an die zweite Polymerschicht eine zweite Metallschicht und eine dritte Polymerschicht in dieser Sequenz anschließen. Durch die zweite Metallschicht die Dauerhaftigkeit der Isolierungseigenschaften weiter verbessert.

Ebenso kann es von Vorteil sein, wenn die Trägerschicht als Polyethylenschicht mit einem Flächengewicht im Bereich von 5 g/m² bis 40 g/m², insbesondere von 10 g/m² bis 30 g/m² vorzugsweise von 15 g/m² bis 25 g/m² ausgebildet ist. An eine derartige Polyethylenschicht lässt sich das erste Element der Klettverbindung leicht anbinden. Ein Flächengewicht im genannten Bereich bietet zusammen mit dem ersten Element der Klettverbindung einen ausreichenden Schutz für die darunter befindliche Metallschicht. Vorzugsweise besitzt die Polyethylenschicht eine Dicke im Bereich von 5 µm bis 45 µm, insbesondere 10 µm bis 35 µm, vorzugsweise 10 µm bis 25 µm.

Alternativ dazu kann die die Trägerschicht auch als Abfolge einer Klebstoffschicht und einer Lackschicht in dieser Sequenz ausgebildet ist. Die Klebstoff- und/oder die Lackschicht können unabhängig voneinander als Ein-, Zwei-, oder Mehrkomponentenschichten auf chemischer, physikalischer, organischer und/oder mineralischer Basis oder auf Wasserbasis ausgebildet sein. Dabei können diese Kleber erhärtend oder dauerelastisch sein. Es werden chemisch erhärtende Klebstoffe bevorzugt verwendet, die durch Dispersion, Polymerisation, Polykondensation oder Polyaddition wirksam werden. Als besonders geeignet haben sich Epoxidharz- und Polyurethanklebstoffe oder Silikone erwiesen. Es kann von Nutzen sein, wenn derartige Klebstoff- oder Lackschichten ein Flächengewicht im Bereich von 5 g/m² bis 200 g/m², insbesondere von 10 g/m² bis 150 g/m² und vorzugsweise von 15 g/m² bis 100 g/m² ausgebildet ist.

Es kann auch günstig sein, wenn die erste Polymerschicht und/oder die zweite Polymerschicht und/oder die dritte Polymerschicht als eine Polyethylenschicht vorzugsweise mit einem Flächengewicht im Bereich von 5 g/m² bis 50 g/m², insbesondere von 10 g/m² bis 30 g/m² und vorzugsweise von 15 g/m² bis 20 g/m² ausgebildet ist. Derartige Polyethylenschichten bieten ausreichenden Schutz für empfindliche Schichten. Vorzugsweise weisen die erste Polymerschicht und/oder die zweite Polymerschicht und/oder die dritte Polymerschicht eine Dicke im Bereich von 5 µm bis 45 µm, insbesondere 10 µm bis 35 µm, bevorzugt 10 µm bis 25 µm auf.

Alternativ dazu ist es auch möglich, wenn die erste Polymerschicht und/oder die zweite Polymerschicht und/oder die dritte Polymerschicht als eine Haftvermittlerschicht, vorzugsweise mit einem Flächengewicht im Bereich von 5 g/m² bis 200 g/m², insbesondere von 10 g/m² bis 150 g/m² und vorzugsweise von 15 g/m² bis 100 g/m² ausgebildet ist. Derartige Haftvermittlerschichten sorgen für eine verbesserte Anbindung zweier angrenzender Schichten. Vorzugsweise weisen die erste Polymerschicht und/oder die zweite Polymerschicht und/oder die dritte Polymerschicht als Haftvermittlerschicht eine Dicke im Bereich von 1 µm bis 0 µm, insbesondere 5 µm bis 40 µm, bevorzugt 10 µm bis 30 µm auf.

Auch Kombinationen von Polyethylenschichten und Haftvermittlerschichten sind möglich.

Es kann bevorzugt sein, wenn die erste Metallschicht und/oder die zweite Metallschicht als eine Aluminiumschicht vorzugsweise mit einer Schichtdicke im Bereich von 3 µm bis 30 µm, 5 µm bis 15 µm, besonders bevorzugt 8 µm bis 12 µm ausgebildet ist. Eine Schichtdicke der Aluminiumschicht in diesem Bereich stellen ausreichende Sperrschichten bei tragbaren Kosten dar.

Es kann auch von Nutzen sein, wenn die Papierschicht ein Flächengewicht im Bereich von 50 g/m² bis 300 g/m², bevorzugt von 70 g/m² bis 200 g/m² aufweist. Derartige Flächengewichte haben sich unter Stabilitätsgesichtspunkten als ausreichend herausgestellt. Insbesondere findet ein Flächengewicht von 80 g/m² bis 120 g/m² Verwendung. Vorzugsweise liegt die Schichtdicke der Papierschicht im Bereich von 65 µm bis 360 µm, insbesondere von 80 µm bis 260 µm und besonders bevorzugt von 95 µm bis 150 µm.

Hinsichtlich des erfindungsgemäßen Flächentemperierungssystems ist es bevorzugt, wenn der formstabile flächige Träger gleichzeitig die Funktion der Dämmstoffschicht übernimmt. Hierzu ist der formstabile flächige Träger vorzugsweise als 1 cm bis 20 cm dicke Polymerschaumstoff-Dämmschicht, insbesondere als 3 cm bis 15 cm dicke und vorzugsweise als 5 cm bis 10 cm dicke Polymerschaumstoff-Dämmschicht, ausgebildet.

Es kann auch vorteilhaft sein, wenn die Polymerschaumstoff-Dämmschicht als eine Schicht aus Polyurethanschaumstoff (PU-Schaum) oder expandiertem Polystyrol (EPS) ausgebildet ist. Diese Materialien haben sich sowohl hinsichtlich ihrer isolierenden Eigenschaften als auch hinsichtlich ihrer Tragfähikeit als besonders geeignet erwiesen.

Darüber hinaus kann es von Nutzen sein, wenn der formstabile, flächige Träger im Wesentlichen rechteckig ausgebildet ist, wobei zwei der stirnseitigen Ränder des Trägers mit einem Nutelement und die zwei anderen stirnseitigen Ränder des Trägers mit einem mit dem Nutelement unter Ausbildung einer Nut-und-Feder-Verbindung zwischen zwei benachbarten formstabilen, flächigen Trägern kooperierenden Federelementen versehen sind. Auf diese Weise kann die Installation des erfindungsgemäßen Flächentemperierungssystems weiter vereinfacht werden. Zusätzlich gewährleistet dies eine stabile Verbindung benachbarter formstabiler, flächiger Träger.

Um die isolierenden Eigenschaften des formstabilen flächigen Trägers weiter zu steigern, ist dessen der Trägerfolie abgewandte Seite zusätzlich mit einer Abdeckfolie versehen. Ebenso kann er hilfreich sein, wenn die Abdeckfolie als Verbundfolie ausgebildet ist, deren dem formstabilen, flächigen Trägern zugewandte Seite als Metallschicht, vorzugsweise als Aluminiumschicht ausgebildet ist. Durch einen derartigen Aufbau lassen sich die isolierenden Eigenschaften des formstabilen, flächigen Trägers weiter erhöhen. Dabei ist es besonders hilfreich, wenn die Abdeckfolie neben der Metallschicht eine Trägerschicht, vorzugsweise aus Papier, und eine Schutzschicht, vorzugsweise aus Polymermaterial, insbesondere Polyethylen, umfasst.

Hinsichtlich des erfindungsgemäßen Flächentemperierungssystems ist es bevorzugt, wenn die Abdeckfolie wasserabweisend ausgeführt ist. Dadurch kann effektiv verhindert werden, dass Leckagewasser oder Feuchtigkeit in den Boden des Raums gelangt.

Die erfindungsgemäße Trägerfolie ist bevorzugt flächig mit dem ersten Element der Klettverbindung versehen, vorzugsweise ist die gesamte Fläche der Trägerfolie mit dem ersten Element der Klettverbindung versehen. Die so gebildete flächige Klettverbindung ermöglicht eine Rohrverlegung auf der gesamten Fläche der erfindungsgemäßen Trägerfolie in einem nahezu beliebigen Verlegemuster.

Gemäß einer Ausführungsform der vorliegenden Erfindung wird ein Element der Klettverbindung durch Haken, Schlingen und/oder Fasern gebildet, die in ein Gewirke, ein Vlies, ein Veloursgewebe, eine Strickware oder dergleichen des anderen Elements der Klettverbindung lösbar eingreifen können. Die Klettverbindung gewährleistet so eine lösbare Verbindung zwischen der Trägerfolie und dem flexiblen Kunststoffrohr, wodurch das flexible Kunststoffrohr auf der Trägerfolie reversibel festgelegt wird. Dabei ist es bevorzugt, wenn das erste Element der Klettverbindung die Haken, Schlingen und/oder Fasern aufweist, während das zweite Element der Klettverbindung durch das Gewirke, das Vlies, das Veloursgewebe, Strickware oder ein Plüsch-, Frottee- oder sonstiges textiles Flächengebilde gebildet wird. Umgekehrt ist auch möglich, dass das erste Element der Klettverbindung durch das Gewirke, das Vlies, das Veloursgewebe, das Plüsch-, Frottee- oder sonstiges textiles Flächengebilde gebildet wird, während das zweite Element der Klettverbindung die Haken, Schlingen und/oder Fasern aufweist.

Gemäß der vorliegenden Erfindung ist der formstabile flächige Träger vorzugsweise so stabil ausgeführt, dass er für die Verlegung des flexiblen Kunststoffrohrs als Bestandteil einer Fußbodenheizung geeignet ist.

Das erfindungsgemäße Flächentemperierungssystem wird durch ein Verfahren hergestellt, das die folgenden Stufen umfasst:
- Bereitstellen einer Abdeckfolie;
- Bereitstellen einer erfindungsgemäßen Trägerfolie;
- Zuführen der Abdeckfolie und der Trägerfolie zu einer Aufschäumvorrichtung;
- Aufschäumen eines Polymermaterials in eine Dicke von 1 cm bis 20 cm zur Polymerschaumstoff-Dämmschicht zwischen der Trägerfolie und der Abdeckfolie in der Aufschäumvorrichtung, wodurch ein einseitig mit der Trägerfolie versehener, formstabiler, flächiger Träger gebildet wird; und
- Verlegen eines flexiblen Kunststoffrohrs, dessen Außenseite zumindest teilweise von einem zweiten Element der Klettverbindung ummantelt ist, auf der erfindungsgemäßen Trägerfolie unter Bildung der Klettverbindung, wodurch das erfindungsgemäße Flächentemperierungssystem gebildet wird.

Wie er hierin verwendet wird, bedeutet der Begriff "Kunststoffrohr" ein Vollkunststoffrohr oder ein Metall-Kunststoff-Verbundrohr. In Bezug auf das erfindungsgemäßen Kunststoffrohr wird der Begriff "flexibel" hierin so verwendet, dass das erfindungsgemäße flexible Kunststoffrohr Biegeradien ermöglicht, die zur Verlegung eines Rohres für ein Flächentemperierungssystem erforderlich sind.

Hinsichtlich des flexiblen Kunststoffrohrs des erfindungsgemäßen Flächentemperierungssystems ist es bevorzugt, dass das flexible Kunststoffrohr zwischen einer ersten Schicht aus polymerem Material, die ein Lumen des Kunststoffrohres umgibt, und dem zweiten Element der Klettverbindung eine flexible, elastische Ummantelung umfasst. Beim Verlegen des flexiblen Kunststoffrohrs auf dem mit der Trägerfolie versehenen formstabilen flächigen Träger passt sich die flexible, elastische Ummantelung aufgrund ihrer Elastitzität an die Oberfläche der Trägerfolie an, wenn auf das flexible Kunststoffrohr von außen Druck ausgeübt wird, beispielsweise indem der Verleger mit dem Fuß auf das erfindungsgemäße flexible Kunststoffrohr steigt oder mit der darauf drückt oder darüber streicht. Dadurch wird die Kontaktfläche zwischen dem flexiblen Kunststoffrohr und der erfindungsgemäßen Trägerfolie vergrößert, was zu einer stärker ausgebildeten Klettverbindung führt. Nach Wegfall des Drucks auf das flexible Kunststoffrohr bleibt diese Kontaktfläche aufgrund der Klettverbindung im Wesentlichen unverändert. In alternativen Ausführungsformen des erfindungsgemäßen Flächentemperierungssystems kann die flexible, elastische Ummantelung des flexiblen Kunststoffrohrs auch fehlen. Darüber hinaus kann das flexible Kunststoffrohr beliebig auf dem mit der erfindungsgemäßen Trägerfolie versehenen formstabilen flächigen Träger ohne festgelegte Verlegerichtung verlegt werden. Zur Korrektur der Verlegung kann die Klettverbindung gelöst und das Rohr in der gewünschten Anordnung verlegt werden. Dies erlaubt so eine flexible Rohrverlegung, die sich an unterschiedliche Raumgeometrien anpassen lässt. Ein Aufschwimmen des flexiblen Kunststoffrohrs im frisch verlegten Estrich ist weitestgehend ausgeschlossen.

Darüber hinaus kann es sich als günstig erweisen, wenn das zweite Element der Klettverbindung spiralförmig oder doppelspiralförmig an der Außenseite des flexiblen Kunststoffrohrs angeordnet ist. Bei geringem Materialaufwand sorgt dies für eine dennoch hohe Häufigkeit der Kontaktstellen zwischen dem flexiblen Kunststoffrohr und der erfindungsgemäßen Trägerfolie. Dabei hat es sich als materialeinsparend und damit kostengünstig erwiesen, wenn die flexible, elastische Ummantelung die erste Schicht aus polymerem Material teilweise ummantelt. Eine besonders effektive Variante hinsichtlich Materialaufwand für die flexible elastische Schicht und hoher Kontaktfläche zwischen dem flexiblen Kunststoffrohr und der erfindungsgemäßen Trägerfolie liegt in diesem Zusammenhang insbesondere dann vor, wenn die flexible, elastische Ummantelung an der der ersten Schicht zugewandten Seite des zweiten Elements der Klettverbindung angeordnet ist und dem Verlauf des ersten Elements der Klettverbindung an der Außenseite des flexiblen Kunststoffrohrs folgt.

Die flexible, elastische Ummantelung kann die erste Schicht des flexiblen Kunststoffrohrs auch vollständig ummantelt. Dazu kann die flexible, elastische Ummantelung im Rahmen einer Coextrusion unmittelbar oder unter Einsatz einer Haftvermittlerschicht auf die erste Schicht aufgebracht werden.

Eine bevorzugte einfache Verbindung zwischen der flexiblen, elastischen Ummantelung sowie der ersten Schicht und/oder dem zweiten Element der Klettverbindung erfolgt über eine Klebstoffschicht.

Die flexible, elastische Ummantelung kann aus einem flexiblen Material, wie einem geschäumten Kunststoff (z.B. ein geschäumtes Polyethylen oder Polystyrol) hergestellt sein. Die flexible, elastische Ummantelung gibt dann bei Einwirkung eines äußeren Drucks aufgrund ihrer Flexibilität nach und ermöglicht auf diese Weise beim Aufdrücken des Kunststoffrohres auf die Trägerfolie die Ausbildung einer vergrößerten Auflagefläche und somit einer stärkeren Klettverbindung zwischen dem Kunststoffrohr und der erfindungsgemäßen Trägerfolie.

Bevorzugt handelt es sich bei dem polymeren Material der ersten Schicht des flexiblen Kunststoffrohrs um vernetztes Polyethylen (PE-X) oder PE-RT. Wie er hierin verwendet wird, bedeutet der Begriff "PE-RT" ein Polyethylen mit erhöhter Temperaturbeständigkeit gemäß ISO 24033. Eine erste Schicht aus PE-X ist aufgrund der thermischen und mechanischen Eigenschaften (wie Schlagzähigkeit, Knickfestigkeit, Punktlastbeständigkeit) bevorzugt. Wie hierin verwendet wird, bedeutet der Begriff "PE-X" vernetztes Polyethylen, wobei Peroxid-vernetztes Polyethylen (PE-Xa), Silan-vernetztes Polyethylen (PE-Xb), Elektronenstrahl-vernetztes Polyethylen (PE-Xc) sowie azovernetztes Polyethylen (PE-Xd) umfasst sind. Gemäß der vorliegenden Erfindung wird Peroxid-vernetztes Polyethylen (PE-Xa) als bevorzugtes polymeres Material der ersten Schicht eingesetzt. Die Vernetzung zum vernetzten Polyethylen erfolgt vorzugsweise wie in der DE 102 51 152 B4 beschrieben. Darüber hinaus kann das polymere Material der ersten Schicht weiter einen Haftvermittler (vorzugsweise ein funktionalisiertes Polyolefinen, insbesondere ein Maleinsäureanhydridgepfropftes LLDPE (lineares Polyethylen geringerer Dichte)) und/oder eine Diffusionssperrschicht, insbesondere aus Polyvinylakohol (PVA) oder Ethylen-Vinylalkohol-Copolymer (EVOH) umfassen.

Im Folgenden soll die vorliegende Erfindung unter Bezugnahme auf die in den Figuren dargestellten Ausführungsformen im Detail erläutert werden. Insoweit sich Teile oder Bauelemente in ihrer Funktion entsprechen, wird deren Beschreibung nicht in jeder der folgenden Figuren wiederholt. Es zeigen:
Fig. 1 eine Querschnittsdarstellung einer Trägerfolie eines Klettverlegesystems für ein Flächentemperierungssystem gemäß einer Ausführungsform der vorliegenden Erfindung;
Fig. 2 eine Querschnittsdarstellung einer Trägerfolie eines Klettverlegesystems für ein Flächentemperierungssystem gemäß einer weiteren Ausführungsform der vorliegenden Erfindung; und
Fig. 3 eine Querschnittsdarstellung eines erfindungsgemäßen Flächentemperierungssystems, das die in Fig. 1 gezeigte erfindungsgemäße Trägerfolie umfasst.

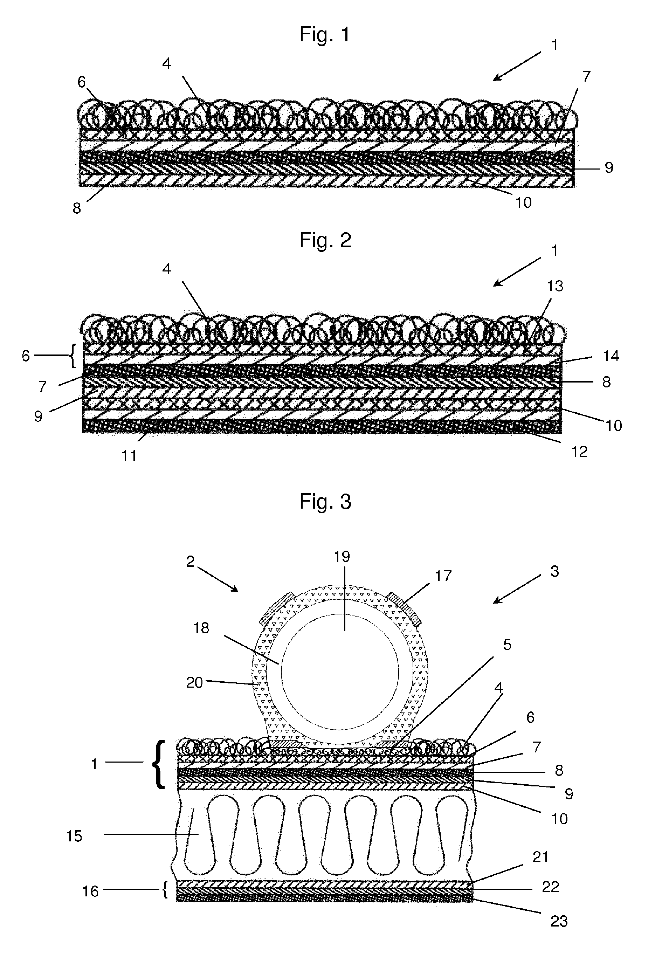

In Fig. 1 ist eine Ausführungsform einer Trägerfolie 1 eines Klettverlegesystems für ein Flächentemperierungssystem 2 gemäß der vorliegenden Erfindung in einer Querschnittsdarstellung gezeigt.

An ihrer wie in Fig. 1 dargestellt oberen Seite, die nach der Verlegung des Flächentemperierungssystem 2 die dem flexiblen Kunststoffrohr 3 zugewandte Seite darstellt, umfasst die erfindungsgemäße Trägerfolie 1 ein erstes Element 4 einer Klettverbindung 5, das in der in Fig. 1 dargestellten Ausführungsform als Gewirke ausgebildet ist, alternativ aber auch als Vlies, Veloursgewebe, Strickware, Plüsch-, Frottee- oder sonstiges textiles Flächengebilde ausgebildet sein kann.

Im Schichtaufbau der erfindungsgemäßen Trägerfolie 1 schließt sich an das erste Element 4 der Klettverbindung 5 eine vorzugsweise und in der in Fig. 1 dargestellten Ausführungsform als Polyethylenfolie ausgebildete Trägerschicht 6 an. Die Trägerschicht 6 hat ein Flächengewicht von vorzugsweise 5 g/m² bis 40 g/m² und eine Schichtdicke im Bereich von 5 µm bis 45 µm. In der in Fig. 1 gezeigten Ausführungsform der erfindungsgemäßen Trägerfolie 1 beträgt das Flächengewicht der 10 etwa 30 g/m² und die Schichtdicke etwa 10 µm bis 35 µm.

An der dem ersten Element 4 der Klettverbindung 5 abgewandten Seite der Trägerschicht 6 schließt sich eine erste Metallschicht 7 an, die in der in Fig. 1 dargestellten Ausführungsform als Aluminiumschicht ausgebildet ist. Die Schichtdicke der ersten Metallschicht 7 liegt vorzugsweise im Bereich von 3 µm bis 30 µm, besonders bevorzugt im Bereich von 5 µm bis 15 µm. In der in Fig. 1 gezeigten Ausführungsform der erfindungsgemäßen Trägerfolie 1 beträgt die Schichtdicke der ersten Metallschicht 7 etwa 9 µm. Die erste Metallschicht sorgt insbesondere für eine verbesserte Wärmeabgabe des erfindungsgemäßen Flächentemperierungssystems an den Raum.

Im Schichtaufbau der erfindungsgemäßen Trägerfolie 1 schließt sich an die erste Metallschicht 7 eine erste Polymerschicht 8 an, die in der in Fig. 1 dargestellten Ausführungsform als Polyethylenschicht ausgebildet ist. Diese erste Polymerschicht 8 hat ein Flächengewicht von vorzugsweise 5 g/m² bis 40 g/m² und eine Schichtdicke im Bereich von 5 µm bis 45 µm. In der in Fig. 1 gezeigten Ausführungsform der erfindungsgemäßen Trägerfolie 1 beträgt das Flächengewicht der ersten Polymerschicht 8 etwa 10 g/m² bis 30 g/m² und die Schichtdicke etwa 10 µm bis 35 µm. In alternativen Ausführungsformen kann die erste Polymerschicht 8 auch fehlen oder als Haftvermittlerschicht ausgebildet sein.

Im Schichtaufbau der erfindungsgemäßen Trägerfolie 1 schließt sich an die erste Polymerschicht 8 eine Papierschicht 9 an. Die Papierschicht 9 soll eine gewisse Eigenstabilität der erfindungsgemäßen Trägerfolie gewährleisten. Dadurch wird ermöglich, dass das erste Element 4 der Klettverbindung 5 bereits beim Vorgang der Folienherstellung aufgebracht werden kann. Bevorzugt weist die Papierschicht ein Flächengewicht im Bereich von 50 g/m² bis 300 g/m², besonders bevorzugt von 70 g/m² bis 200 g/m² auf. Derartige Flächengewichte haben sich unter Stabilitätsgesichtspunkten als ausreichend herausgestellt. In der in Fig. 1 gezeigten Ausführungsform der erfindungsgemäßen Trägerfolie 1 beträgt das Flächengewicht der Papier 9 etwa 80 g/m² bis 120 g/m² und die Schichtdicke etwa 95 µm bis 150 µm.

Im Schichtaufbau der erfindungsgemäßen Trägerfolie 1 schließt sich an die Papierschicht 9 eine zweite Polymerschicht 10 an, die in der in Fig. 1 dargestellten Ausführungsform als Polyethylenschicht ausgebildet ist. Die zweite Polymerschicht 10 hat ein Flächengewicht von vorzugsweise 5 g/m² bis 40 g/m² und eine Schichtdicke im Bereich von 5 µm bis 45 µm. In der in Fig. 1 gezeigten Ausführungsform der erfindungsgemäßen Trägerfolie 1 beträgt das Flächengewicht der zweiten Polymerschicht 10 etwa 10 g/m² bis 30 g/m² und die Schichtdicke etwa 10 µm bis 35 µm.

In Fig. 2 ist eine weitere Ausführungsform der erfindungsgemäßen Trägerfolie 1 eines Klettverlegesystems für ein Flächentemperierungssystem 2 ebenfalls in einer Querschnittsdarstellung gezeigt.

Fig. 2 zeigt wiederum, dass die erfindungsgemäße Trägerfolie 1 an einer Seite (in der Darstellung gemäß Fig. 2 oben) das erste Element 4 der Klettverbindung 5 umfasst. In der in Fig. 1 dargestellten Ausführungsform der erfindungsgemäßen Trägerfolie 1 ist das erste Element 4 der Klettverbindung 5 wiederum als Gewirke ausgebildet ist. In anderen Ausführungsformen der erfindungsgemäßen Trägerfolie 1 kann es alternativ auch als Vlies, Veloursgewebe, Strickware, Plüsch-, Frottee- oder sonstiges textiles Flächengebilde ausgebildet sein.

Im Schichtaufbau der erfindungsgemäßen Trägerfolie 1 schließt sich an das erste Element 4 der Klettverbindung 5 eine Trägerschicht 6 an. In der in Fig. 1 dargestellten Ausführungsform ist die Trägerschicht 6 als Abfolge einer Klebstoffschicht 13 und einer Lackschicht 14 in dieser Reihenfolge ausgebildet. Die Klebstoffschicht 13 und die Lackschicht 14 können unabhängig voneinander als Ein-, Zwei-, oder Mehrkomponentenschichten auf chemischer, physikalischer, organischer und/oder mineralischer Basis oder auf Wasserbasis ausgebildet sein. Dabei können diese Kleber erhärtend oder dauerelastisch sein. Es werden chemisch erhärtende Klebstoffe bevorzugt verwendet, die durch Dispersion, Polymerisation, Polykondensation oder Polyaddition wirksam werden. Als besonders geeignet haben sich Epoxidharz- und Polyurethanklebstoffe oder Silikone erwiesen. Bevorzugt weisen die Klebstoffschicht 13 und die Lackschicht 14 ein Flächengewicht im Bereich von 5 g/m² bis 200 g/m², insbesondere von 10 g/m² bis 150 g/m² und vorzugsweise von 15 g/m² bis 100 g/m² auf.

In anderen Ausführungsformen können als Trägerschicht 6 auch Kombination anderen Klebstoffe und Lacke in alternativen Schichtdicken eingesetzt werden.

An der dem ersten Element 4 der Klettverbindung 5 abgewandten Seite der Trägerschicht 6 schließt sich im Schichtaufbau der erfindungsgemäßen Trägerfolie 1 auch in der in Fig. 2 dargestellten Ausführungsform eine erste Metallschicht 7 an, die in der in Fig. 1 dargestellten Ausführungsform als Aluminiumschicht ausgebildet ist. Die Schichtdicke der ersten Metallschicht 7 liegt vorzugsweise im Bereich von 3 µm bis 30 µm, besonders bevorzugt im Bereich von 5 µm bis 15 µm. In der in Fig. 1 gezeigten Ausführungsform der erfindungsgemäßen Trägerfolie 1 beträgt die Schichtdicke der ersten Metallschicht 7 etwa 9 µm ausgebildet ist.

Im Schichtaufbau der erfindungsgemäßen Trägerfolie 1 schließt sich an die erste Metallschicht 7 eine erste Polymerschicht 8 an, die in der in Fig. 1 dargestellten Ausführungsform als Polyethylenschicht ausgebildet ist. Die erste Polymerschicht 8 hat ein Flächengewicht von vorzugsweise 5 g/m² bis 40 g/m² und eine Schichtdicke im Bereich von 5 µm bis 45 µm. In der in Fig. 1 gezeigten Ausführungsform der erfindungsgemäßen Trägerfolie 1 beträgt das Flächengewicht der ersten Polymerschicht 8 etwa 10 g/m² bis 30 g/m² und die Schichtdicke etwa 10 µm bis 35 µm. In alternativen Ausführungsformen kann die erste Polymerschicht 8 wiederum nicht vorhanden sein oder als Haftvermittlerschicht ausgebildet sein.

Im Schichtaufbau der erfindungsgemäßen Trägerfolie 1 schließt sich an die erste Polymerschicht 8 eine Papierschicht 9 an. Die Papierschicht 9 soll eine gewisse Eigenstabilität der erfindungsgemäßen Trägerfolie gewährleisten. Dadurch wird ermöglicht, dass das erste Element 4 der Klettverbindung 5 bereits beim Vorgang der Folienherstellung aufgebracht werden kann. Bevorzugt weist die Papierschicht ein Flächengewicht im Bereich von 50 g/m² bis 300 g/m², besonders bevorzugt von 70 g/m² bis 200 g/m² auf. Derartige Flächengewichte haben sich unter Stabilitätsgesichtspunkten als ausreichend herausgestellt. In der in Fig. 1 gezeigten Ausführungsform der erfindungsgemäßen Trägerfolie 1 beträgt das Flächengewicht der Papier 9 etwa 80 g/m² bis 120 g/m² und die Schichtdicke etwa 95 µm bis 150 µm.

Im Schichtaufbau der erfindungsgemäßen Trägerfolie 1 schließt sich an die Papierschicht 9 eine zweite Polymerschicht 10 an, die in der in Fig. 1 dargestellten Ausführungsform als Polyethylenschicht ausgebildet ist. Die zweite Polymerschicht 10 hat ein Flächengewicht von vorzugsweise 5 g/m² bis 40 g/m² und eine Schichtdicke im Bereich von 5 µm bis 45 µm. In der in Fig. 1 gezeigten Ausführungsform der erfindungsgemäßen Trägerfolie 1 beträgt das Flächengewicht der zweiten Polymerschicht 10 etwa 10 g/m² bis 30 g/m² und die Schichtdicke etwa 10 µm bis 35 µm. In alternativen Ausführungsformen kann die zweite Polymerschicht 10 auch als Haftvermittlerschicht ausgebildet sein.

Im Schichtaufbau der erfindungsgemäßen Trägerfolie 1 folgt der zweiten Polymerschicht 10 in der in Fig. 2 dargestellten Ausführungsform der erfindungsgemäßen Trägerfolie 1 eine zweite Metallschicht 11. Die zweite Metallschicht 11 soll die Konstanz der Isolierungseigenschaften des erfindungsgemäßen Flächentemperierungssystems weiter verbessern. In der in Fig. 1 dargestellten Ausführungsform ist auch die zweite Metallschicht 11 als Aluminiumschicht ausgebildet ist. Die Schichtdicke der zweiten Metallschicht 7 liegt vorzugsweise im Bereich von 3 µm bis 30 µm, besonders bevorzugt im Bereich von 5 µm bis 15 µm. In der in Fig. 1 gezeigten Ausführungsform der erfindungsgemäßen Trägerfolie 1 beträgt die Schichtdicke der ersten Metallschicht 7 etwa 9 µm ausgebildet ist.

Im Schichtaufbau der erfindungsgemäßen Trägerfolie 1 schließt sich an die zweite Metallschicht 11 eine dritte Polymerschicht 12 an, die in der in Fig. 1 dargestellten Ausführungsform ebenfalls als Polyethylenschicht ausgebildet ist. Die dritte Polymerschicht 12 hat ein Flächengewicht von vorzugsweise 5 g/m² bis 40 g/m² und eine Schichtdicke im Bereich von 5 µm bis 40 µm. In der in Fig. 1 gezeigten Ausführungsform der erfindungsgemäßen Trägerfolie 1 beträgt das Flächengewicht der dritten Polymerschicht 12 etwa 10 g/m² bis 30 g/m² und die Schichtdicke etwa 10 µm bis 35 µm. In alternativen Ausführungsformen kann die dritte Polymerschicht 12 auch als Haftvermittlerschicht ausgebildet sein.

Der Aufbau und das Verlegen eines erfindungsgemäßen Flächentemperierungssystems 2 sollen im Folgenden unter Bezugnahme auf Fig. 3 erläutert werden, in der ein erfindungsgemäßes Flächentemperierungssystem 2 in einer Querschnittsdarstellung gezeigt ist, das die in Fig. 1 dargestellte erfindungsgemäße Trägerfolie 1 umfasst. Es versteht sich, dass diese Ausführungen für den Aufbau und das Verlegen von erfindungsgemäßen Flächentemperierungssystemen 2 mit anderen erfindungsgemäßen Trägerfolien 1 entsprechend Anwendung finden.

Das erfindungsgemäße Flächentemperierungssystem 2 umfasst ein flexibles Kunststoffrohr 3, eine erfindungsgemäße Trägerfolie 6, einen formstabilen, flächigen Träger 15 sowie eine Abdeckfolie 16.

Die Außenseite des flexiblen Kunststoffrohrs 3 ist in Form von Spiralen von einem zweiten Element 17 einer Klettverbindung 5 ausgebildet. Das flexible Kunststoffrohr 3 umfasst eine erste Schicht 18 aus polymerem Material, die ein Lumen 19 zur Führung eines Wärmeträgermediums umgibt. In der in Fig.3 dargestellten Ausführungsform ist die erste Schicht 18 aus Peroxid-vernetztem Polyethylen (PE-Xa), um das herum in der angegeben Reihenfolge eine Haftvermittlerschicht und eine Diffusionssperrschicht angeordnet sind. Bevorzugt ist die erste Schicht 18 sauerstoffdicht gemäß DIN 4726. Die erste Schicht 18 wird vorzugsweise durch Coextrusion hergestellt. Die Außenseite des flexiblen Kunststoffrohres 3 bildet das zweite Element 17 der Klettverbindung 5, das als Bänder ausgebildet ist, die in Form von im Wesentlichen parallel zueinander verlaufenden Spiralen um die erste Schicht 18 angeordnet sind. Damit ist die Außenseite des flexiblen Kunststoffrohres 3 von dem zweiten Element 17 der Klettverbindung 5 teilweise ummantelt. Das zweite Element 17 der Klettverbindung 5 umfasst Haken, Fasern oder ähnliches. Um die erste Schicht 18 des flexiblen Kunststoffrohres 2 herum ist über die gesamte Fläche mittels einer Haftvermittlerschicht und/oder einer Klebstoffverbindung eine weitere Schicht aus geschäumtem Polyethylen befestigt, die eine flexible elastische Ummantelung 20 darstellt. Die flexible elastische Ummantelung 20 ist wiederum über eine Klebstoffverbindung mit dem zweiten Element 17 der Klettverbindung 5 verbunden.

Das flexible Kunststoffrohr 3 ist darin auf die erfindungsgemäße Trägerfolie 1 aufgebracht, die wiederum flächig auf den formstabilen, flächigen Träger 15 aufgebracht ist. Der Aufbau der erfindungsgemäßen Trägerfolie 1 wurde unter Bezugnahme auf Fig. 1 erläutert. Diese Ausführungen finden auch in Bezug auf Fig. 3 entsprechend Anwendung. Es versteht sich, dass in dem erfindungsgemäßen Flächentemperierungssystem 2 auch andere Ausführungsformen der erfindungsgemäßen Trägerfolie 1 zum Einsatz kommen können.

Bei seiner Verlegung wird das flexible Kunststoffrohr 3 auf die erfindungsgemäße Trägerfolie 1 aufgelegt, so dass das flexible Kunststoffrohr 3 zunächst nur im Scheitelbereich punktuell auf der erfindungsgemäßen Trägerfolie 1 aufliegt. Wird nun auf das flexible Kunststoffrohr 3 von oben ein Druck ausgeübt, gibt die flexible elastische Ummantelung 20 nach und passt sich der Oberfläche der erfindungsgemäßen Trägerfolie 1 an. Damit liegt das zweite Element 17 der Klettverbindung 5 nun flächig auf dem ersten Element 4 auf der erfindungsgemäßen Trägerfolie 1 auf, so dass aufgrund der vergrößerten Auflagefläche eine stärkere Klettverbindung 5 ausgebildet wird, die nach Wegfall des ausgeübten Drucks im Wesentlichen bestehen bleibt.

An der dem flexiblen Kunststoffrohr 3 abgewandten Seite der erfindungsgemäßen Trägerfolie 1 ist der formstabilen, flächigen Träger 15 angeordnet, der als PolymerschaumstoffDämmschicht 15 aus expandiertem Polystyrol (EPS) oder Polyurethanschaum mit einer Dicke von 8 cm ausgebildet ist, wobei Dicken von 1 cm bis 20 cm möglich sind, wobei eine ausreichende Dämmwirkung erzielt wird.

Auf die der erfindungsgemäßen Trägerfolie 1 abgewandten Seite des formstabilen, flächigen Trägers 15 ist die Abdeckfolie 16 aufgebracht, die aus einer vorzugsweise als einer Aluminiumfolie ausgebildeten Metallschicht 21, einem Papierträger 22 und einer vorzugsweise als Polyethylenfolie ausgebildeten Schutzschicht 23 aufgebaut ist, durch den die Abdeckfolie 16 wasserabweisend ausgeführt ist. Dadurch kann effektiv verhindert werden, dass Leckagewasser oder Feuchtigkeit in den Boden des Raums gelangt.

Um den mit der Abdeckfolie 16 und der erfindungsgemäßen Trägerfolie 1 versehenen formstabilen, flächigen Träger 1 herzustellen, werden die erfindungsgemäße Trägerfolie 1 und die Abdeckfolie 16 entsprechend ausgerichtet einer Aufschäumvorrichtung zugeführt. In der Aufschäumvorrichtung wird Polyurethan zu der Polymerschaumstoff-Dämmschicht 15 aus Polyurethan mit einer Dicke von 8 cm aufgeschäumt, wobei erfindungsgemäß Dicken von 1 cm bis 20 cm eingestellt werden. Die zweite Polymerschicht 10 der erfindungsgemäßen Trägerfolie 1 und Metallschicht 21 der Abdeckfolie 16 haften an dem als Polymerschaumstoff-Dämmschicht 15 ausgebildeten formstabilen, flächigen Träger 15 an.

Zum Verlegen eines als Fußbodenheizung ausgebildeten erfindungsgemäßen Flächentemperierungselements 2 wird der mit der erfindungsgemäßen Trägerfolie 1 und der Abdeckfolie 16 versehene formstabile, flächige Träger 15 zunächst auf dem Boden vollflächig ggf. nach vorherigem Zuschneiden ausgelegt. Daraufhin wird das flexible Kunststoffrohr 3 im gewünschten Muster auf der erfindungsgemäßen Trägerfolie 1 verlegt und angedrückt, so dass eine Klettverbindung 5 mit vergrößerter Auflagefläche ausgebildet wird. Zur Korrektur des Verlegemusters kann die reversibel ausgebildete Klettverbindung 5 durch Anheben des flexiblen Kunststoffrohrs 3 gelöst werden, wonach dieses erneut verlegt werden kann. Abschließend wird die Anordnung mit Estrich vergossen.

Die vorliegende Erfindung wurde unter Bezugnahme auf die in den Figuren gezeigten Ausführungsformen detailliert erläutert. Es versteht sich, dass die vorliegende Erfindung nicht auf die gezeigte Ausführungsform beschränkt ist, sondern sich der Umfang der vorliegenden Erfindung aus den beiliegenden Ansprüchen ergibt.

## Patentansprüche

1. Trägerfolie (1) für ein Klettverlegesystem einer Flächentemperierungsvorrichtung (2), wobei die Trägerfolie (1) an einer Seite ein erstes Element (4) einer Klettverbindung (5) aufweist und als Verbundfolie ausgebildet ist, wobei sich an das auf die Trägerfolie (1) aufgebrachte Element (4) der Klettverbindung (5) im Folienaufbau eine Trägerschicht (6) anschließt,
**dadurch gekennzeichnet, dass**
im Folienaufbau auf die Trägerschicht (6) anschließend eine erste Metallschicht (7), eine Papierschicht (9) und eine zweite Polymerschicht (10) in dieser Sequenz folgen.

2. Trägerfolie (1) nach Anspruch 1, **dadurch gekennzeichnet, dass** zwischen der ersten Metallschicht (7) und der Papierschicht (9) eine erste Polymerschicht (8) angeordnet ist.

3. Trägerfolie (1) nach Anspruch 1 oder Anspruch 2, **dadurch gekennzeichnet, dass** die erste Polymerschicht (8) als Polyolefinschicht oder als Haftvermittlerschicht ausgebildet ist.

4. Trägerfolie (1) nach einem Ansprüche 1 bis 3, **dadurch gekennzeichnet, dass** sich im Folienaufbau an die zweite Polymerschicht (10) eine zweite Metallschicht (11) und eine dritte Polymerschicht (12) in dieser Sequenz anschließen.

5. Trägerfolie (1) nach einem Ansprüche 1 bis 4, **dadurch gekennzeichnet, dass** die Trägerschicht (6) als Polyethylenschicht mit einem Flächengewicht im Bereich von 10 g/m² bis 40 g/m² ausgebildet ist.

6. Trägerfolie (1) nach einem Ansprüche 1 bis 5, **dadurch gekennzeichnet, dass** die Trägerschicht (6) als Abfolge einer Klebstoffschicht (13) und einer Lackschicht (14) in dieser Sequenz ausgebildet ist.

7. Trägerfolie (1) nach einem Ansprüche 1 bis 6, **dadurch gekennzeichnet, dass** die erste Polymerschicht (8) und/oder die zweite Polymerschicht (10) und/oder die dritte Polymerschicht (12) unabhängig voneinander als eine Polyethylenschicht vorzugsweise mit einem Flächengewicht im Bereich von 5 g/m² bis 40 g/m² ausgebildet ist.

8. Trägerfolie (1) nach einem Ansprüche 1 bis 7, **dadurch gekennzeichnet, dass** die erste Metallschicht (7) und/oder die zweite Metallschicht (11) als eine Aluminiumschicht vorzugsweise mit einer Schichtdicke im Bereich von 3 µm bis 30 µm ausgebildet ist.

9. Trägerfolie (1) nach einem Ansprüche 1 bis 8, **dadurch gekennzeichnet, dass** die Papierschicht (9) ein Flächengewicht im Bereich von 50 g/m² bis 300 g/m² aufweist.

10. Flächentemperierungssystem (2), umfassend:
- mindestens ein flexibles Kunststoffrohr (3), dessen Außenseite zumindest teilweise von einem zweiten Element (17) einer Klettverbindung (5) ummantelt ist;
- eine Trägerfolie (1) nach einem der Ansprüche 1 bis 9; und
- einen formstabilen, flächigen Träger (15), auf dessen einer Seite die Trägerfolie (1) aufgebracht ist.

11. Flächentemperierungssystem (2) nach Anspruch 10, **dadurch gekennzeichnet, dass** der formstabile, flächige Träger (15) als 1 cm bis 20 cm dicke Polymerschaumstoff-Dämmschicht (15) ausgebildet ist, dessen der Trägerfolie (1) abgewandte Seite mit einer Abdeckfolie (16) verbunden ist.

12. Flächentemperierungssystem (2) nach Anspruch 10 oder Anspruch 11, **dadurch gekennzeichnet, dass** die Polymerschaumstoff-Dämmschicht (15) als eine Schicht aus Polyurethanschaumstoff oder expandiertem Polystyrol (EPS) ausgebildet ist.

13. Flächentemperierungssystem (1) nach einem Ansprüche 10 bis 12, **dadurch gekennzeichnet, dass** die Abdeckfolie (16) als Verbundfolie ausgebildet ist, deren dem formstabilen, flächigen Trägern (15) zugewandte Seite als Metallschicht (21), vorzugsweise als Aluminiumschicht (21) ausgebildet ist.

14. Flächentemperierungssystem (2) nach einem Ansprüche 10 bis 13, **dadurch gekennzeichnet, dass** das flexible Kunststoffrohr (3) zwischen einer ersten Schicht (18) aus polymerem Material, die ein Lumen (19) des Kunststoffrohres (3) umgibt, und dem zweiten Element (17) der Klettverbindung (5) eine flexible, elastische Ummantelung (20) umfasst.

15. Verfahren zur Herstellung eines Flächentemperierungssystem (2) nach einem Ansprüche 10 bis 14, das die folgenden Stufen umfasst:
- Bereitstellen einer Abdeckfolie (16);
- Bereitstellen einer Trägerfolie (1) nach einem Ansprüche 1 bis 9;
- Zuführen der Abdeckfolie (16) und der Trägerfolie (1) zu einer Aufschäumvorrichtung;
- Aufschäumen eines Polymermaterials in eine Dicke von 1 cm bis 20 cm zu einer Polymerschaumstoff-Dämmschicht zwischen der Trägerfolie (1) und der Abdeckfolie (16) in der Aufschäumvorrichtung, wodurch ein einseitig mit der Trägerfolie (1) versehener, formstabiler, flächiger Träger (15) gebildet wird; und
- Verlegen eines flexiblen Kunststoffrohrs (3), dessen Außenseite zumindest teilweise von einem zweiten Element (17) der Klettverbindung (5) ummantelt ist, auf der Trägerfolie (1) unter Bildung der Klettverbindung (5), wodurch das Flächentemperierungssystem (2) gebildet wird.
